# EUROPEAN PATENT SPECIFICATION

(11) **EP 0 383 588 B1**
(45) Date of publication and mention of the grant of the patent: **19.04.1995**
(21) Application number: 90301600.4
(22) Date of filing: 15.02.1990
(51) Int. Cl.: G11B 5/52, G11B 5/60, G11B 5/53

(54) **Head drum for recording and/or reproducing apparatus**
Kopftrommel für ein Aufzeichnungs- und/oder Wiedergabegerät
Tambour de tête pour appareil d'enregistrement et/ou de reproduction

(30) Priority: 17.02.1989 JP 37733/89
(43) Date of publication of application: 22.08.1990
(73) Proprietor: SONY CORPORATION, Tokyo (JP)
(72) Inventor: Saito, Takehiko, Shinagawa-ku, Tokyo (JP)
(74) Representative: Ayers, Martyn Lewis Stanley

(56) References cited:
- DE-A- 2 903 197
- US-A- 4 040 109
- PATENT ABSTRACTS OF JAPAN, unexamined applications, P field, vol. 6, no. 175,September 9, 1982 THE PATENT OFFICE JAPANESE GOVERNMENT Page 117 P 141
- PATENT ABSTRACTS OF JAPAN, unexamined applications, P field, vol. 8, no. 275,December15, 1984 THE PATENT OFFICE JAPANESE GOVERNMENT Page 140 P 321
- PATENT ABSTRACTS OF JAPAN, unexamined applications, P field, vol. 11, no. 116,April 11, 1987 THE PATENT OFFICE JAPANESE GOVERNMENT Page 13 P 566

## Description

The present invention relates generally to a head drum applicable to a video tape recorder. More particularly, the invention relates to an improved head drum which forms a uniform air film between a recording medium such as a magnetic tape and an area of the head drum wrapped by the tape to reduce wear on the tape and the peripheral surface of the head drum and resistance of tape traveling.

Recording operation of, for example, a video tape recorder (VTR) or a rotary head type digital audio tape recorder (R-DAT) is carried by a head drum to form tracks, on a magnetic tape wrapped about the head drum, which extend at an angle with respect to the tape traveling direction.

DE-A-2903197, on which the precharacterising portion of appended claim 1 is based, discloses a head drum having a central chamber containing lubricating oil.

A conventional head drum includes generally a stationary drum installed on a mechanical chassis, a rotary drum rotatable relative to the stationary drum with a given axial gap, and a plurality of magnetic heads which are exposed on the same circumferential plane as the rotary drum. A lead surface having a stage edge is formed which extends helically on the peripheral surface of the head drum. When recording or reproducing, the magnetic tape travels along the lead surface while wrapping thereabout at a given angle according to the rotation of the head drum. Diagonal tracks are formed on the magnetic tape by the head drum in recording operation, while in a play operation the head drum scans the diagonal tracks to read information signals from the magnetic tape.

Rotation of the head drum causes circumambient air to move so as to follow the peripheral surface thereof. This air forms between the magnetic tape and the peripheral surface of the head drum from the position where the magnetic tape starts to wrap about the head drum forming an air film. The magnetic tape therefore travels wrapped about the head drum assisted by the air film.

It will be appreciated that the magnetic tape travels so as to be separated slightly from the peripheral surface by the air film, preventing wear on the outer surface of both the head drum and the magnetic tape from occurring and reducing tape traveling resistance to achieve stable running operation.

However, forming of the air film is dependent upon the traveling direction of the magnetic tape and the rotation of the rotary drum, often resulting in an uneven air film thickness. Usually, thickness of the air film is greater at the initial tape wrapping position, while it becomes thinner approaching the tape wrapping end position. Thus, separation of the magnetic tape from the peripheral surface of the head drum is too great at the initial position to contact stably with the rotary head and contacts too directly with the rotary drum at the tape wrapping end position. Due to this variation of contact of the magnetic tape with the head drum ranging from the initial tape wrapping position to the tape wrapping end position, frequency characteristics when recording or reproducing are reduced and tape traveling resistance is increased, resulting in damaged magnetic tape, wear on tape and head surfaces, and playback jitter.

To solve such problems caused by the uneven air film, adjustment of back tension of the magnetic tape, and provision of a hole, communicating with the inside of the head drum, formed near the initial tape wrapping position to partially discharge air to the inside thereof so as to maintain the air film at a constant thickness in the vicinity of the initial tape wrapping position, and a groove of a so-called pump-out type, for positively discharging air from the inside of the head drum to the outside thereof, formed between the upper and lower drums have been proposed.

However, it is practically impossible to form a uniform air film by adjusting the back tension so as to vary tension between the initial tape wrapping position and the tape wrapping end position, and, provision of the hole for partially discharging air forming the air film into the inside of the head drum causes the magnetic tape to be injured by the edge of the hole. Further, as for the pump-out type groove, at the tape wrapping end position, air film thickness is increased, the air film however becomes too thick in the vicinity of the initial tape wrapping position. An attempt is accordingly proposed wherein the size or orientation of the groove is selected to form a uniform air film. This means however cannot sufficiently achieve a uniform air film over the entire range between the initial tape wrapping position and the tape wrapping end position.

It is accordingly an object of the present invention to provide a head drum which can provide a uniform air film between a recording medium and a circumferencial area of the head drum wrapped by the recording medium to overcome the above drawbacks.

According to the present invention, there is provided a head drum for a recording and/or reproducing apparatus comprising:
a stationary drum;
a rotary drum disposed on said stationary drum with a given gap;
a head, for recording information signals on and/or reproducing information signals from a recording medium, provided on a surface of said rotary drum adjacent to said stationary drum, and
a chamber provided in the head drum; and characterised in that
means for discharging air in said chamber to the outside of the head drum according to rotation of said rotary drum and for controlling flow rate of discharged air so as to be increased from a first position where the recording medium starts to wrap about the peripheral surface of the head drum to a second position where the wrapping of the recording medium terminates so that the discharged air forms a substantially uniform air film between the recording medium and the circumferential surface of the head drum in cooperation with circumambient air introduced therebetween according to the rotation of said rotary drum.

Preferably, the head drum comprises a number of spiral grooves formed in a surface of said rotary drum facing said stationary drum extending from an inner position on said surface of said rotary drum proximate its axis to the outer periphery thereof for making an air film by spouting air out from the inner area of said drum apparatus to an outer position thereof by action of rotation of said rotary drum;
a peripheral portion of the surface of said stationary drum which faces the surface of said rotary drum being ring shaped, the width of the ring shaped portion at a starting position where a tape medium begins to wrap around a peripheral surface of said drum apparatus being narrower than a position where the wrapping terminates.

Preferably, the rotary drum is positioned on said stationary drum with a predetermined gap in an axial direction and positioned coaxially with said stationary drum; the head drum comprising
a number of spiral grooves formed in a surface of said rotary drum facing said stationary drum extending from an inner position on said surface of said rotary drum proximate its axis to the outer periphery thereof for making an air film by spouting air out from the inner area of said drum apparatus to an outer position thereof by action of rotation of said rotary drum;
said predetermined gap being such that a gap at a starting position where a tape medium begins to wrap around a circumferential surface of the drum apparatus is wider than a position where the wrapping terminates.

In the preferred mode, the chamber is defined by a first circular recessed portion formed in the rotary drum and a second circular recessed portion formed in the stationary drum.
The second recessed portion is eccentric towards the first position for discharging air which has volume less than that at the second position in cooperation with the means.

The means includes a plurality of grooves formed in a surface of the rotary drum facing the stationary drum for discharging the air in the chamber to the outside thereof.

The grooves are in the form of an arc-shape and arranged in the surface of the the rotary drum at regular intervals.

Alternatively, the chamber is defined by a first circular recessed portion provided concentrically in the rotary drum and a second circular recessed portion provided concentrically in the stationary drum. The means includes a plurality of grooves communicating between the first circular recessed portion and the outside of the rotary drum and a stepped portion formed in a surface of the stationary drum facing the rotary drum such that the stepped portion is deepest at the first position and becomes gradually shallower nearing the second position to provide the greatest flow rate of discharged air at the outside of the head drum through the grooves in the second position.

The stepped portion includes a plurality of stages. The stages decrease in depth from the first position to the second position so that flow rate of air discharged to the outside of the head drum through the grooves is greatest at the second position.

An air intake hole may be formed in the rotary drum for introducing circumambient air of the head drum into the chamber.

The present invention will be understood from the detailed description given hereinbelow and from the accompanying drawings of the preferred embodiment of the invention which are not intended to limit the invention to a specific embodiment but are for explanation and understanding only.

Fig. 1 is a perspective view which shows a magnetic tape cassette and a recording and/or reproducing mechanism incorporating a head drum according to the invention.

Fig. 2 is an exploded perspective view which shows a head drum of the invention.

Fig. 3 is a longitudinal sectional view which shows a head drum.

Fig. 4 is a bottom view which shows an upper rotary drum of a head drum.

Fig. 5 is a plan view which shows a plurality of air outlet ports formed in an upper rotary drum, as indicated by a broken line, and a lower stationary drum.

Fig. 6 is an exploded perspective view which shows a second embodiment of a head drum of the invention.

Fig. 7 is a plan view which shows a lower stationary drum of a second embodiment.

Fig. 8 is an enlarged sectional view taken along the line IIIV-IIIV of Fig. 7 which shows a head drum of a second embodiment.

Fig. 9 is an enlarged sectional view taken along the line IX-IX of Fig. 7.

Fig. 10 is an enlarged sectional view taken along the line X-X of Fig. 7.

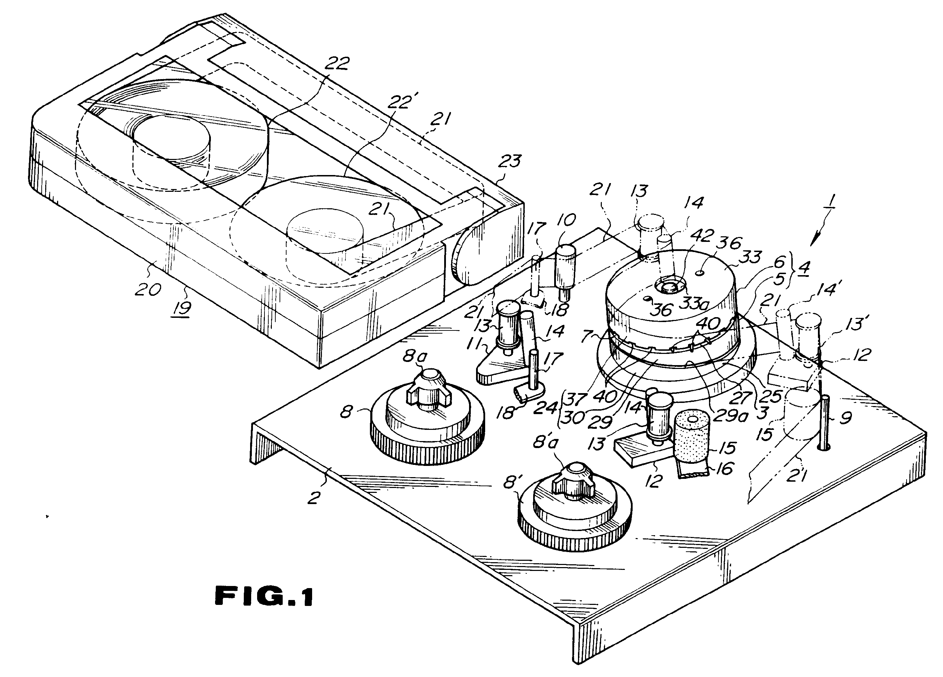

Referring now to the drawings, particularly to Fig. 1, a recording and/or reproducing system of a VTR which has a head drum according to the present invention and a magnetic tape cassette are shown. A rotary head drum 4 is installed on a drum base 3 which is mounted rearward on a mechanical chassis 2 of a VTR 1. The rotary head drum is slightly inclined with respect to an axis vertical to the mechanical chassis 2 by a given angle and includes an upper drum 6 (rotary drum), a lower drum 5 (stationary drum), and magnetic heads 7 supported on the lower surface of the upper drum.

A supply reel table 8 and a take up reel table 8' are arranged forward on the mechanical chassis 2 separately from each other by a given interval. A capstan 9 is provided at a right side of the rotary head drum 4 which is driven by a capstan motor (not shown). A guide pole 10 is installed at a left side of the head drum 4.

Tape loading bases 11 and 12 are provided movably between a loading start position indicated by a solid and a loading end position indicated by a broken line each including a vertical guide post 13 and a inclined guide post 14. A pinch roller 15 which serves to quide the travel of magnetic tape in cooperation with the capstan roller, and is rotatably supported on a shaft of a pinch roller arm pivotably supported on the mechanical chassis 2. A tension regulating pin 17 (back tension pin) is pivotably supported on the end portion of a tension regulating arm 18. The pinch roller 15 and the tension regulating pin 17 also move, in loading operation, from loading start positions indicated by a solid line to loading end positions indicated by a broken line respectively. In a tape cassette 19, magnetic tape 21 wound on tape reels 22 and 22′ is provided and a portion thereof is exposed from an access opening of a casing 20 which is covered by an openable front lid 23.

In operation, insertion of the tape cassette 19 into the VTR 1 causes engaging holes formed in the reel table 8 and 8′ to be received on reel pawl hubs 8a and 8a′ respectively. The openable front lid 23 opens to expose a portion of the magnetic tape, with the vertical guide posts 13, the inclined guide posts 14, the pinch roller 15, and the tension regulating pin 17 positioned behind the exposed magnetic tape in the access portion of the tape cassette.

With such arrangement, initiation of tape loading operation causes the tape loading bases 11 and 12, the pinch roller 15, and the tension regulating pin 17 to be displaced towards the loading end position, thereby the magnetic tape 21, as shown by the broken line in Fig. 1, is withdrawn from the tape cassette 20 and a portion thereof wraps helically about a peripheral surface 24 of the head drum at a given angle.

With initiation of recording or reproducing operation, the capstan 9 and the head drum 6 rotate in the counterclockwise direction, while the take up reel table 8′ rotates in the clockwise direction, causing the magnetic tape 21 to travel. It will be appreciated that rotation of the capstan 9 causes a portion of the magnetic tape 21 pressed against the capstan by the pinch roller 15 to travel, winding about the take-up reel 22 of the tape cassette 19 as scanning of the tape by the rotary magnetic heads is carried out. In such operation, the rotary magnetic heads 7 record information signals on the magnetic tape, forming slanting tracks on the surface thereof. The rotary magnetic heads 7 encode the tracks with information in a record mode and, alternatively, scans the tracks to read out information signals previously recorded on the magnetic tape in a play mode.

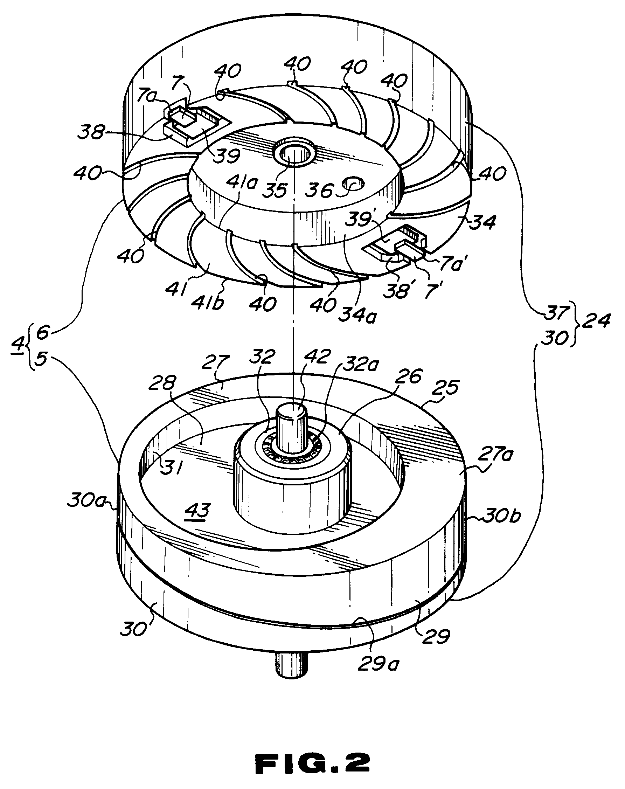

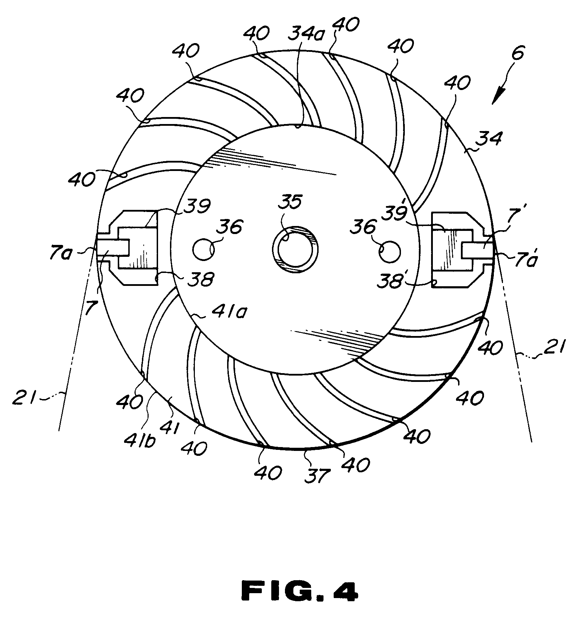

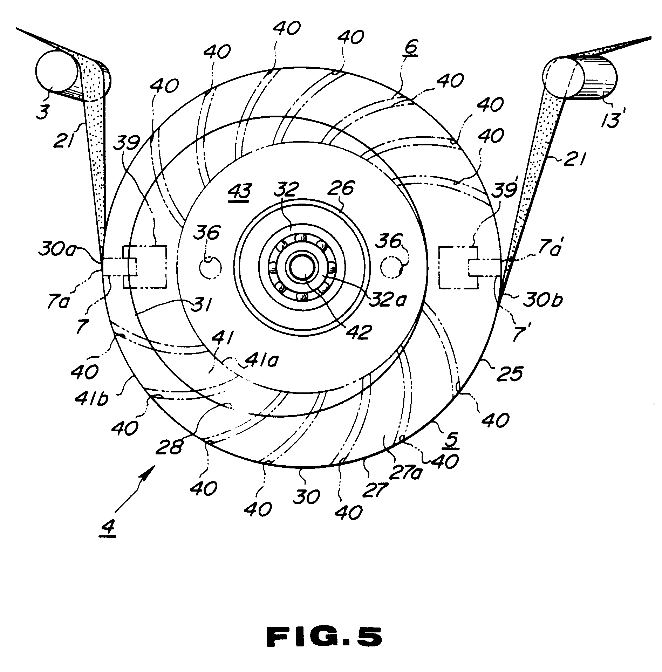

Referring to Figs. 2 to 5, the head drum according to the invention is shown. The lower drum 5 is integrally formed with a metal disc portion 25 and a cylindrical metal boss 26. A recessed portion 28 is formed in the upper surface of the disc portion 25 so as to open to the bottom surface of the upper drum 6. The boss 26 projects from the central portion of the disc portion 25 vertically.

Formed on the circumferential surface 30 of the disc portion 25 is a staged surface, or lead surface 29 which defines a tape wrapping position about the head drum 4 relative to the axial direction of the disc portion. An edge 29a formed between the lead surface and the circumferential surface 30 is provided slantingly wherein it is highest at the initial tape wrapping position 30a where the magnetic tape contacts the circumferential surface of the head drum initially and is lowest at a tape wrapping end position 30b where wrapping of the magnetic tape about the head drum terminates.

The circular recessed portion 28 is eccentric with respect to the center axis of the disc portion 25 so as to be biased towards the tape wrapping initial position 30a, therefore, the wall thickness defined between circumferential surface 30 and the inner surface of the recessed portion 28 is thinnest at the initial tape wrapping position while it is thickest at the tape wrapping end position. With this arrangement, the upper surface of the disc portion 25, or ring-shaped surface 27a adjacent the bottom of the upper drum 6 is narrowest at the initial tape wrapping position 30a and becomes gradually wider approaching the tape wrapping end position 30b.

Ball bearings 32 are pressed into the upper and lower end portions of a housing 26a formed through the boss 26. The lower drum 5 is installed on the mechanical chassis via a mounting plate (not shown) screwed to the drum base 3.

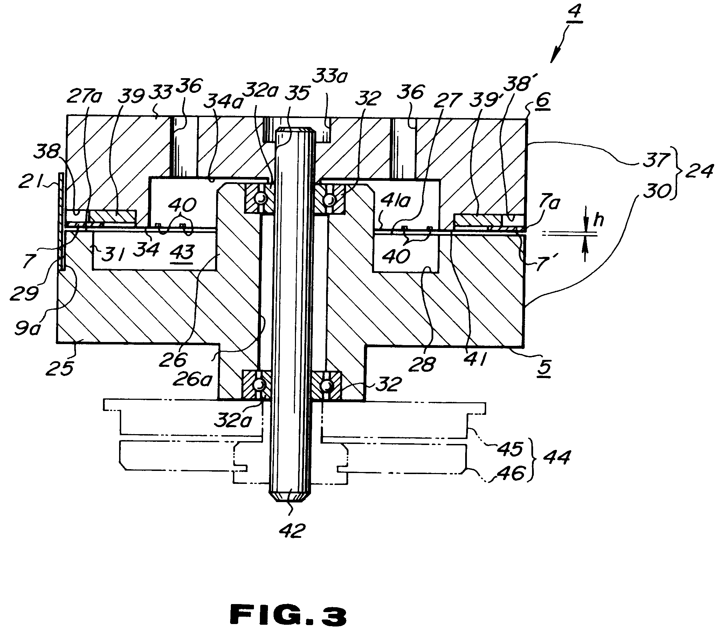

Size of the upper drum 6 is substantially equal to that of the lower drum 5 in diameter and height. As shown in Fig. 3, circular recessed portions 33a and 34b are formed in the central area of the upper and lower surfaces 33 and 34. A press-fit through hole 35 is formed in the center of the upper drum 6 and air intake holes 36 are formed symmetrically opposite the press-fit hole 35. In the outer end portions of the lower surface 34, recessed portions 38 and 38′ are formed so as to open to the outside of the upper drum 6.

The rotary magnetic heads 7 and 7' are supported by head bases 39 and 39′ respectively. Each magnetic head is mounted in the recessed portion of the upper drum 6 with a tape contact surface 7a thereof exposed on the same plane as the circumferential surface of the upper drum 6.

As shown in Fig. 2, a plurality of grooves are formed in the ring-shaped surface 41 of the bottom of the upper drum 6 so as to open to the ring-shaped surface 27a of the lower drum 5. Each groove extends from the inside wall 41a to the outside wall 41b and is radially curved in the counterclockwise direction as viewed from the lower side, in other words, in a direction opposite the rotation of the upper drum 6. They are circumferentially arranged at regular intervals except areas in which the magnetic heads are disposed to discharge air from within the head drum 4 to the outside thereof.

A drive shaft 42 is pressed into inner rings 32a of the ball bearings 32. A portion projecting from the boss 26 of the lower drum 5 is also pressed into the press-fit hole 35 of the upper drum 6.

The upper drum 6 is fixed on the drive shaft 42 rotatably supported by the lower drum 5 with a clearance h (see Fig. 3) provided between the upper and lower drums, forming an inner chamber 43 defined between the recessed portion 28 and 34a in the head drum 4. The grooves communicate between the chamber 43 to the outside of the head drum 4.

A flat motor 44 for driving the upper drum is comprised of a stator 45 fixed on the mechanical chassis 2 and a rotor supporting the drive shaft 42.

As mentioned above, the width of the ring-shaped surface 27a of the lower drum 5 is narrowest at the initial tape wrapping position 30a, while it becomes gradually wider approaching the tape wrapping end position 30b. The width of the ring-shaped lower surface 41 of the upper drum 6 is equal all around from its inner to outer circumferences. It will be noted that the area defined between the ring-shaped surfaces 27a and 41 facing each other with the clearance h is narrowest at the initial tape wrapping position 30a, while it becomes gradually wider towards the tape wrapping end position 30b.

During operation, the magnetic tape wraps about the circumferential surface of the head drum and the wrapping starts at the tape wrapping initial position 30a and terminates at the wrapping end position 30b.

The upper drum 6, as described above, rotates in the counterclockwise direction as viewed from the upper surface. This motion causes circumambient air around the outer surface 37 to follow thereon. Therefore, the rotation of the upper drum 6 with the magnetic tape 21 wrapping about the head drum 4 causes the air moving along with the outer surface 37 to be inserted between the outer surface 37 and the magnetic tape 21 from the tape wrapping initial position to form an air film.

Since the air intake holes 36 are provided in the upper drum which communicate with the inner chamber 43, the rotation of the upper drum 6 causes circumambient air around the head drum to be introduced into the inner chamber 43 from the air intake holes. This air is then discharged to the outside of the head drum through the grooves 40 constantly and a portion thereof is inserted between the outer surface 24 of the head drum 4 and the magnetic tape 21 wrapping thereabout to form the air film.

An amount of air V to be discharged to the outside of the head drum through the grooves 40 is defined by the following equation with respect to the air pressure Pₐ, a coefficient of viscosity of air », a clearance h between the upper and lower drums 5 and 6, angular velocity ω, and an area Rₒ² - Rᵢ² defined by portions of the ring-shaped surfaces of the upper and lower drums 5 and 6 opposing each other (Rₒ : a distance from the axis to the outer edge of the ring-shaped surface, Rᵢ : a distance between the axis and the inner edge of the ring-shaped surface).$\text{V =} \frac{{\text{3»ω (R}}_{\text{o}} {\text{² - R}}_{\text{i}} \text{²)}}{{\text{P}}_{\text{a}} \text{h²}}$

As the area (Rₒ² - Rᵢ²) is smallest at the initial tape wrapping position 30a and it becomes wider towards the tape wrapping end position 30b gradually, according to the above formula, the amount of air to be discharged between the magnetic tape and the outer surface 24 of the head drum 4 through the grooves 40 is smallest at the initial tape wrapping position, while it is increased as it nears the tape wrapping end position 30b.

Therefore, the air moving together with the outer surface 37 of the upper drum 6 is inserted between the circumferential surface 24 of the head drum and the magnetic tape 21, forming an air film which is thickest at the initial tape wrapping position 30a. The amount of the air to be discharged between the circumferential surface 24 and the magnetic tape through the grooves 40 however is increased approaching the tape wrapping end position 30b, resulting in an air film formed of circumambient air mixed with air discharged by the grooves 40 which have a uniform thickness over the range between the tape wrapping initial and end positions.

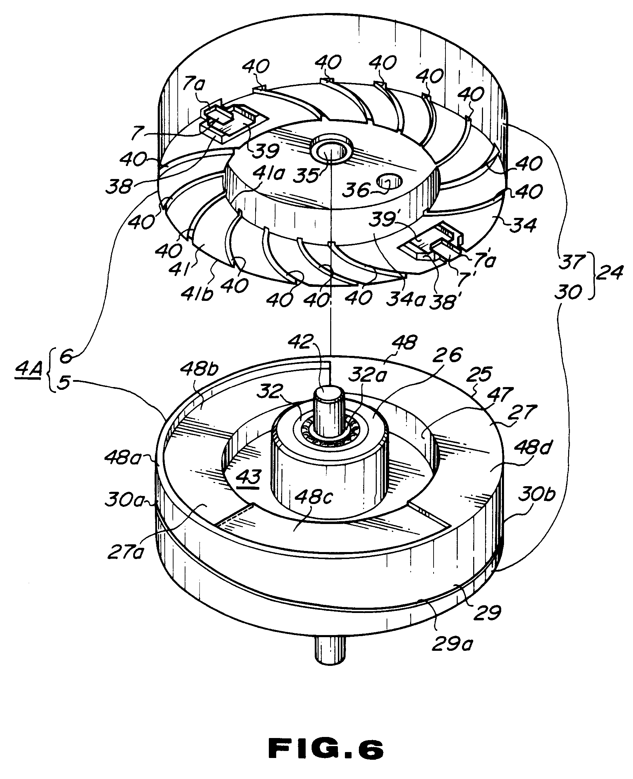

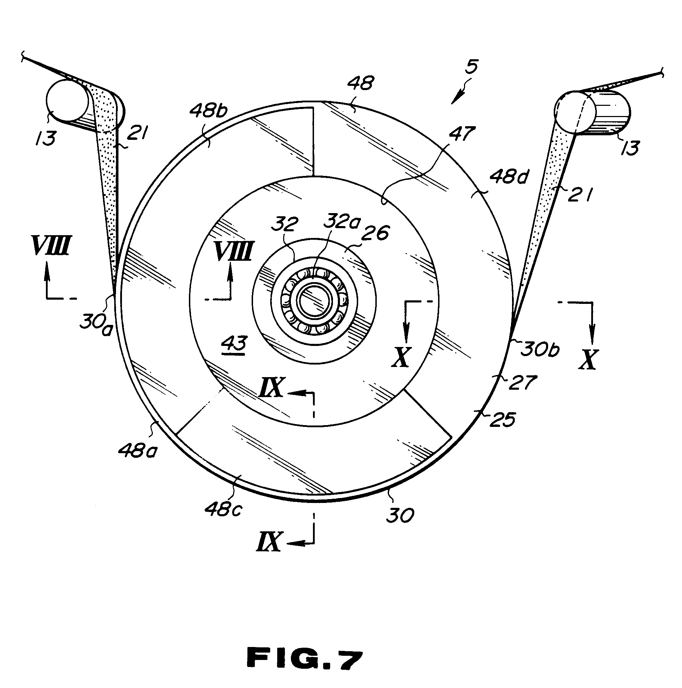

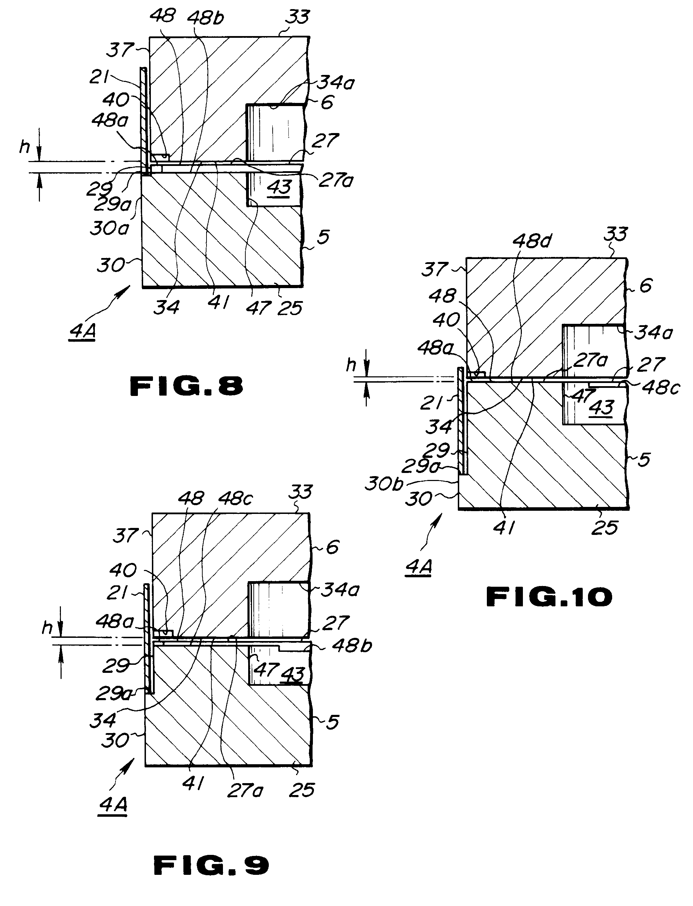

Referring to Figs. 6 to 10, a head drum 4A of an alternate embodiment is shown. This head drum 4A is different from the head drum 4 of the first embodiment as previously mentioned in that the area of facing ring-shaped surfaces of the upper and the lower drums are circumferentially even and a gap provided between the upper and lower drums varies partially. An attempt will be made here to describe the points of difference.

A circular recessed portion 47 is formed in a disc portion 25 of a lower drum 5 concentrically with respect to the central axis of the disc portion. The widths of a ring-shaped surface 48 of the disc portion 25 and a facing ring-shaped surface 41 of an upper drum 6 are substantially equal circumferentially.

Steps 48b and 48c, which have depths different from each other, are formed in the ring-shaped surface 48. A peripheral edge 48a is the same height over the entire circumference. The step 48b ranges from a position which is set 90° apart from the positions 30a and 30b and extends around the surface 48 for 135° at a depth which is the lowermost of the steps described (hereinafter, this step will be referred to as the lowermost stage). The step 48c ranges from the termination point of the lowermost stage 48b to a position which is 90° apart therefrom, also in the counterclockwise direction at a height slightly greater than that of the lowermost stage (hereinafter, this step will be referred to as a middle stage). The remainder, or a portion 48d excluding the stages 48b and 48c is provided on the same plane as the peripheral edge 48a (hereinafter, this portion will be referred to as the highest stage). Thus, the clearance h formed between the upper and lower drums 5 and 6 is greatest at the lowermost stage 48b, smallest at the highest stage 48d, and a middle clearance between the highest and lowermost stages at the middle stage 48c.

According to the positional relationship between the lowermost, the middle, and the highest stages 48b, 48c, and 48d, the clearance at the tape wrapping initial position 30a is greatest, that at the position between the positions 30a and 30b (hereinafter, this position will be referred to as the tape wrapping central position) being middle, and that at the tape wrapping end position 30b being smallest.

Therefore, depending upon circumferential variation of the clearances as described above, the amount of air discharged between the circumferential surface 24 of the head drum and the magnetic tape 21 from the inner chamber 43 through the grooves 40 is, according to the above equation, greatest at the tape wrapping initial position 30a, intermediate at the tape wrapping central position, and smallest at the tape wrapping end position 30b. It will be appreciated that an air film is provided which has a uniform layer thickness formed by a mixture of the air moving together with the upper drum 6 and the air discharged through the grooves 40.

The constant height of the peripheral edge 48a of the ring-shaped surface 48 of the lower drum 5 provides only a very small clearance between the outer surface 30 of the lower drum and the outer surface 37 of the upper drum 6, preventing unstable wrapping and traveling of the magnetic tape about the peripheral surface of the head drum from occurring and prevents the tape from being damaged by the edge of the head drum.

In the second embodiment as mentioned above, while a plurality of stages are provided in the upper surface of the lower drum to control flow rate of air discharged through the grooves, a sloping surface which has a constantly increased depth may be provided in place of the stages which will also adjust thickness of the air film precisely.

As is clear from the above, the first embodiment of the invention is provided with a head drum which includes generally an upper rotary drum and a lower stationary drum disposed concentrically therewith with a given clearance therebetween. Internally, a plurality of grooves functioning as outlet ports discharging air in the head drum towards the outside thereof according to rotational operation of the head drum are provided which extend from the inner edge to the outer edge of the upper rotary drum. Moreover, a surface of the lower stationary drum opposing the lower surface of the upper drum has a width which gradually increases from the initial tape wrapping position to the tape wrapping end position. Therefore, rotational motion of the upper rotary drum causes air in the head drum to be discharged to the outside thereof through the grooves, thereby positively forming an air film at an area of the outer surface of the head drum where the drum is wrapped by the magnetic tape. The surface area where the upper and the lower drums face each other becomes gradually wider from the initial tape wrapping position to the tape wrapping end position and thus the amount of air discharged to the outside of the head drum is small at the initial tape wrapping position, while it is great at the tape wrapping end position, resulting in a uniform air film over the range between the tape wrapping initial position and the tape wrapping end position.

In the second embodiment of the invention, a plurality of grooves similar to the first embodiment are provided in the upper rotary drum. A staged clearance between the upper and the lower drums or a constantly increased clearance becomes narrower from the initial tape wrapping position to the tape wrapping end position.

Similar to the first embodiment, rotational motion of the upper rotary drum causes air in the head drum to be discharged to the outside thereof through the grooves, thereby positively forming an air film at an area of the outer surface of the head drum where the drum is wrapped by magnetic tape. The amount of air discharged to the outside of the head drum is small at the tape wrapping initial position, while it is great at the tape wrapping end position, resulting in a uniform air film over the range between the tape wrapping initial position and the tape wrapping end position.

Although the invention has been shown and described with respect to a best mode embodiment thereof, it should be understood by those skilled in the art that the foregoing and various other changes, omissions, and additions in the form and detail thereof may be made therein without departing from the scope of the invention as defined by the appended claims. For example, the invention is applicable to a head drum which includes a rotary lower drum and a stationary upper drum. In this construction, a plurality of grooves (air outlet ports) may be formed in the surface of the upper drum which faces the statioary drum.

The geometry of the grooves is not limited to an arc-shape, linear grooves may be provided for example. The bottom surface of the upper drum may be machined to form the grooves or a plurality of teeth for forming air outlet ports each having a width wider than an interval between the outlet ports adjacent to each other to control flow rate of air discharged therethrough.

## Claims

1. A head drum for a recording and/or reproducing apparatus comprising:
a stationary drum (5);
a rotary drum (6) disposed on said stationary drum (5) with a given gap (h);
a head (7), for recording information signals on and/or reproducing information signals from a recording medium, provided on a surface (41) of said rotary drum (6) adjacent to said stationary drum (5), and
a chamber (43) provided in the head drum; and
characterised in that
means (40,27) for discharging air in said chamber (43) to the outside of the head drum according to rotation of said rotary drum (6) and for controlling flow rate of discharged air so as to be increased from a first position (30a) where the recording medium starts to wrap about the peripheral surface (30) of the head drum to a second position (30b) where the wrapping of the recording medium terminates so that the discharged air forms a substantially uniform air film between the recording medium and the circumferential surface (30) of the head drum in cooperation with circumambient air introduced therebetween according to the rotation of said rotary drum (6).

2. A head drum as set forth in claim 1, wherein said chamber (43) is defined by a first circular recessed portion (34) formed in the rotary drum (6) and a second circular recessed portion (28) formed in the stationary drum (5), said second recessed portion (28) being eccentric towards the first position (30a) for discharging air which has volume less than that at the second position (30b) in cooperation with said means (40,27).

3. A head drum as set forth in claim 2, wherein said means (40,27) includes a plurality of grooves (40) formed in a surface (41) of said rotary drum (6) facing said stationary drum (5) for discharging the air in said chamber (43) to the outside thereof.

4. A head drum as set forth in claim 1, wherein said chamber (43) is defined by a first circular recessed portion (34) provided concentrically in said rotary drum (6) and a second circular recessed portion (47) provided concentrically in said stationary drum (5), said means (40,27) including a plurality of grooves (40) communicating between the first circular recessed portion (34) and the outside of the rotary drum (6) and a stepped portion (48b,48c,48d) formed in a surface (27) of the stationary drum (5) facing said rotary drum (6) such that the stepped portion (48b,48c,48d) is deepest at the first position (30a) and becomes gradually shallower nearing the second position (30b) to provide the greatest flow rate of discharged air at the outside of the head drum through the grooves (40) in the second position (30b).

5. A head drum as set forth in claim 4, wherein said stepped portion (48b,48c,48d) includes a plurality of stages, said stages decreasing in depth from the first position (30a) to the second position (30b) so that flow rate of air discharged to the outside of the head drum through the grooves (40) is greatest at the second position (30b).

6. A head drum as set forth in claim 3, 4 or 5, wherein said grooves (41) are in the form of an arc-shape and arranged in the surface (41) of the said rotary drum (6) at regular intervals.

7. A head drum as set forth in any preceding claim further comprising an intake air hole (36), formed in said rotary drum (6), for introducing circumambient air of the head drum into said chamber (43).

8. A head drum according to claim 1 comprising:
a number of spiral grooves (40) formed in a surface (41) of said rotary drum (6) facing said stationary drum (5) extending from an inner position on said surface (6) of said rotary drum (6) proximate its axis to the outer periphery thereof for making an air film by spouting air out from the inner area of said drum apparatus to an outer position thereof by action of rotation of said rotary drum (6);
a peripheral portion of the surface (27) of said stationary drum (5) which faces the surface (41) of said rotary drum (6) being ring shaped, the width of the ring shaped portion at a starting position (30a) where a tape medium begins to wrap around a peripheral surface (30) of said drum apparatus being narrower than a position (30b) where the wrapping terminates.

9. A head drum according to claim 1:
wherein the rotary drum (6) is positioned on said stationary drum (5) with a predetermined gap (h) in an axial direction and positioned coaxially with said stationary drum (5); the head drum comprising
a number of spiral grooves (40) formed in a surface (41) of said rotary drum (6) facing said stationary drum (5) extending from an inner position on said surface (41) of said rotary drum (6) proximate its axis to the outer periphery thereof for making an air film by spouting air out from the inner area of said drum apparatus to an outer position thereof by action of rotation of said rotary drum (6);
said predetermined gap (h) being such that a gap at a starting position (30a) where a tape medium begins to wrap around a circumferential surface of the drum apparatus is wider than a position (30b) where the wrapping terminates.

10. A head drum according to claim 8 or 9, wherein the change in the elevation of the surface (27) of said ring shaped portion of said stationary drum (5) is stepwise.

11. A head drum according to claim 8 or 9, wherein the change in the elevation of the surface (27) of said ring shaped portion of said stationary drum is continuous.

12. A head drum according to any one of claims 8 to 11, wherein said tape medium is a magnetic tape and a magnetic head (7) is mounted on said rotary drum (6).

13. A head drum according to any one of claims 8 to 12, wherein said drum apparatus is mounted in a video tape recorder system.

14. A head drum according to any one of claims 8 to 13, wherein said drum apparatus is mounted in an audio tape recorder system.

## Patentansprüche

1. Kopftrommel für eine Aufzeichnungs- und/oder Wiedergabevorrichtung, die aufweist:
eine stationäre Trommel (5);
eine Rotationstrommel (6), die auf der stationären Trommel (5) mit einer vorgegebenen Lücke (h) angeordnet ist;
einen Kopf (7) zur Aufzeichnung von Informationssignalen auf und/oder zur Wiedergabe von Informationssignalen von einem Aufzeichnungsmedium, der auf einer Oberfläche (41) der Rotationstrommel (6) benachbart zur stationären Trommel (5) angeordnet ist, und
eine Kammer (43), die in der Kopftrommel vorgesehen ist;
gekennzeichnet durch
eine Einrichtung (40, 27) zum Entladen von Luft in der Kammer (43) zur Außenseite der Kopftrommel entsprechend einer Rotation der Rotationstrommel (6) und zum Steuern der Flußrate der entladenen Luft, damit sie von einer ersten Position (30a) aus, wo das Aufzeichnungsmedium damit beginnt, sich um die periphere Oberfläche (30) der Kopftrommel zu schlingen, sich zu einer zweiten Position (30b) erhöht, wo das Umschlingen des Aufzeichnungsmediums aufhört, so daß die entladene Luft einen im wesentlichen gleichförmigen Luftfilm zwischen dem Aufzeichnungsmedium der Umfangsoberfläche (30) der Kopftrommel zusammen mit der Umgebungsluft bildet, die entsprechend der Rotation der Rotationstrommel (6) dazwischen eingeführt wird.

2. Kopftrommel nach Anspruch 1, wobei die Kammer (43) durch eine erste runde Ausnehmung (34) bestimmt ist, die in der Rotationstrommel (6) gebildet ist, und eine zweite runde Ausnehmung (28), die in der stationären Trommel (5) gebildet ist, wobei die zweite Ausnehmung (28) exzentrisch gegenüber der ersten Position (30a) zur Entladung der Luft ist, die ein Volumen hat, das kleiner als das in der zweiten Position (30b) in Verbindung mit der genannten Einrichtung (40, 27) ist.

3. Kopftrommel nach Anspruch 2, wobei die Einrichtung (40, 27) mehrere Nuten (40) aufweist, die in einer Oberfläche (41) der Rotationstrommel (6) gebildet sind, die der stationären Trommel (5) gegenüberliegt, um die Luft in der Kammer (43) auf ihre Außenseite zu entladen.

4. Kopftrommel nach Anspruch 1, wobei die Kammer (43) durch eine erste runde Ausnehmung (34) festgelegt ist, die konzentrisch in der Rotationstrommel (6) vorgesehen ist, und eine zweite runde Ausnehmung (47), die konzentrisch in der stationären Trommel (5) vorgesehen ist, wobei die Einrichtung (40, 27) mehrere Nuten (40) aufweist, die zwischen der ersten runden Ausnehmung (34) und der Außenseite der Rotationstrommel (6) und einem abgesetzten Bereich (48b, 48c, 48d) zusammenwirken, der in einer Oberfläche (27) der stationären Trommel (5) gebildet ist, der der Rotationstrommel (6) gegenüberliegt, so daß der abgesetzte Bereich (48b, 48c, 48d) am tiefsten in der ersten Position (30a) ist und allmählich flacher in Richtung auf die zweite Position (30b) wird, um die größte Flußrate der entladenen Luft an die Außenseite der Kopftrommel über die Nuten (40) in der zweiten Position (30b) bereitzustellen.

5. Kopftrommel nach Anspruch 4, wobei der abgesetzte Bereich (48b, 48c, 48d), mehrere Stufen aufweist, wobei die Stufen bezüglich ihrer Tiefe von ersten Position (30a) zur zweiten Position (30b) abnehmen, so daß die Flußrate der Luft, die zur Außenseite der Kopftrommel über die Nuten (40) entladen wird, in der zweiten Position (30b) am größten ist.

6. Kopftrommel nach Anspruch 3, 4 oder 5, wobei die Nuten (41) bogenförmig sind und in der Oberfläche (41) der Rotationstrommel (6) in regelmäßigen Intervallen angeordnet sind.

7. Kopftrommel nach einem der vorhergehenden Ansprüche, die weiter ein Einlaßluftloch (36) aufweist, das in der Rotationstrommel (6) gebildet ist, um Umgebungsluft der Kopftrommel in die Kammer (43) einzuführen.

8. Kopftrommel nach Anspruch 1, die aufweist:
eine Anzahl von spiralförmigen Nuten (40), die in einer Oberfläche (41) der Rotationstrommel (6) gebildet sind, die der stationären Trommel (5) gegenüberliegen, die sich von einer inneren Position auf der Oberfläche (41) der Rotationstrommel (6) in der Nähe ihrer Achse zu ihrer äußeren Peripherie erstrecken, um einen Luftfilm durch Herausschießen von Luft aus dem inneren Bereich der Trommelvorrichtung in ihre äußere Position bei einer Rotation der Rotationstrommel (6) zu bilden;
einen peripheren Bereich auf der Oberfläche (27) der stationären Trommel (5), der der Oberfläche (41) der Rotationstrommel (6), die ringförmig geformt ist, gegenüberliegt, wobei die Breite des ringförmigen Bereichs bei einer Startposition (30a), wo ein Bandmedium sich um die periphere Oberfläche (30) der Trommelvorrichtung zu umschlingen beginnt, enger ist als bei einer Position (30b), wo das Umschlingen aufhört.

9. Kopftrommel nach Anspruch 1:
wobei die Rotationstrommel (6) auf der stationären Trommel (5) mit einer vorgegebenen Lücke (h) in einer axialen Richtung angeordnet und koaxial zur stationären Trommel (5) positioniert ist; wobei die Kopftrommel aufweist:
eine Anzahl von spiralförmigen Nuten (40), die in einer Oberfläche (41) der Rotationstrommel (6) gebildet sind, die der stationären Trommel (5) gegenüberliegen, die sich von einer inneren Position auf der Oberfläche (41) der Rotationstrommel (6) in der Nähe ihrer Achse zu ihrer äußeren Peripherie erstrecken, um einen Luftfilm durch Herausschießen von Luft aus dem inneren Bereich der Trommelvorrichtung in ihre äußere Position bei einer Rotation der Rotationstrommel (6) zu bilden;
wobei die vorgegebene Lücke (h) so ist, daß eine Lücke an der Startposition (30a), wo ein Bandmedium sich um Umfangsoberfläche der Trommelvorrichtung zu umschlingen beginnt, breiter ist als bei einer Position (30b), wo das Umschlingen aufhört.

10. Kopftrommel nach Anspruch 8 oder 9, wobei die Höhenänderung der Oberfläche (27) des ringförmigen Bereichs der stationären Trommel (5) stufenweise ist.

11. Kopftrommel nach Anspruch 8 oder 9, wobei die Höhenänderung auf der Oberfläche (27) des ringförmigen Bereichs der stationären Trommel stetig ist.

12. Kopftrommel nach einem der Ansprüche 8 bis 11, wobei das Bandmedium ein Magnetband ist und ein Magnetkopf (7) auf der Rotationstrommel (6) befestigt ist.

13. Kopftrommel nach einem der Ansprüche 8 bis 12, wobei die Trommelvorrichtung in einem Videobandrecordersystem befestigt ist.

14. Kopftrommel nach einem der Ansprüche 8 bis 13, wobei die Trommelvorrichtung in einem Audiobandrecordersystem befestigt ist.

## Revendications

1. Tambour de tête pour un appareil d'enregistrement et/ou de reproduction, comprenant :
- un tambour stationnaire (5) ;
- un tambour rotatif (6) disposé avec un jeu donné (h) sur ledit tambour stationnaire (5) ;
- une tête (7) pour enregistrer des signaux d'information et/ou pour reproduire des signaux d'information sur un support d'enregistrement, prévue sur une surface (41) dudit tambour rotatif (6) adjacente audit tambour stationnaire (5), et
- une chambre (43) prévue dans ledit tambour de tête ;
caractérisé en ce qu'il est prévu des moyens (40, 27) pour décharger l'air dans ladite chambre (43) vers l'extérieur du tambour de tête selon la rotation dudit tambour rotatif (6) et pour commander le débit d'air déchargé de manière à ce qu'il augmente depuis une première position (30a) où le support d'enregistrement commence à s'enrouler autour de la surface périphérique (30) du tambour de tête jusqu'à une seconde position (30b) où l'enroulement du support d'enregistrement se termine, de sorte que l'air déchargé forme un film d'air sensiblement uniforme entre le support d'enregistrement et la surface circonférentielle (30) du tambour de tête en coopération avec l'air environnant introduit entre le support d'enregistrement et la surface circonférentielle du tambour de tête en raison de la rotation dudit tambour rotatif (6).

2. Tambour de tête selon la revendication 1, dans lequel ladite chambre (43) est définie par une première évidée circulaire (34) formée dans le tambour rotatif (6) et une seconde partie évidée circulaire (28) formée dans le tambour stationnaire (5), ladite seconde partie évidée (28) étant excentrique en direction de la première position (30a) afin de décharger l'air qui a un volume inférieur à celui de la seconde position (30b), en coopération avec lesdits moyens (40, 27).

3. Tambour de tête selon la revendication 2, dans lequel lesdits moyens (40, 27) comprennent une pluralité de gorges (40) formées dans une surface (41) dudit tambour rotatif (6) faisant face audit tambour stationnaire (5) afin de décharger l'air dans ladite chambre (43) à l'extérieur dudit tambour.

4. Tambour de tête selon la revendication 1, dans lequel ladite chambre (43) est définie par une première partie évidée circulaire (34) prévue concentriquement dans ledit tambour rotatif (6) et une seconde partie évidée circulaire (47) prévue concentriquement dans ledit tambour stationnaire (5), lesdits moyens (40, 27) comprenant une pluralité de gorges (40) qui communiquent entre la première partie évidée circulaire (34) et l'extérieur du tambour rotatif (6), et une partie étagée (48b, 48c, 48d) formée dans une surface (27) du tambour stationnaire (5) qui fait face audit tambour rotatif (6) de telle manière que la partie étagée (48b, 48c, 48d) est la plus profonde à la première position (30a) et devient progressivement moins profonde en se rapprochant de la seconde position (30b) pour assurer le débit d'air déchargé maximum à l'extérieur du tambour de tête via les gorges (40) dans la seconde position (30b).

5. Tambour de tête selon la revendication 4, dans lequel ladite partie étagée (48b, 48c, 48d) comprend une pluralité d'étages, lesdits étages diminuant en profondeur depuis la première position (30a) jusqu'à la seconde position (30b) de sorte que le débit d'air déchargé vers l'extérieur du tambour de tête via les gorges (40) est maximum à la seconde position (30b).

6. Tambour de tête selon l'une quelconque des revendications 3, 4 ou 5, dans lequel lesdites gorges (41) ont des formes en arc, et sont agencées dans la surface (41) dudit tambour rotatif (6) à des intervalles réguliers.

7. Tambour de tête selon l'une quelconque des revendications précédentes, comprenant en outre un trou de prise d'air (36), formé dans ledit tambour rotatif (6), afin d'introduire de l'air environnant du tambour de tête à l'intérieur de ladite chambre (43).

8. Tambour de tête selon la revendication 1, comprenant :
- un certain nombre de gorges en spirale (40) formées dans une surface (41) dudit tambour rotatif (6) faisant face audit tambour stationnaire (5), s'étendant depuis une position intérieure sur ladite surface (6) dudit tambour rotatif (6) à proximité de son axe jusqu'à la périphérie extérieure de celui-ci, afin de produire un film d'air en rejetant l'air hors de la zone intérieure dudit tambour, jusqu'à une position extérieure de celui-ci par action de la rotation dudit tambour rotatif (6) ;
- une partie périphérique de la surface (27) dudit tambour stationnaire (5), qui fait face à la surface (41) dudit tambour rotatif (6), ayant une forme annulaire, dont la largeur à une position de départ (30a) où le support en bande commence à s'enrouler autour d'une surface périphérique (30) dudit tambour est inférieure celle à une position (30b) ou se termine l'enroulement.

9. Tambour de tête selon la revendication 1, dans lequel le tambour rotatif (6) est placé sur ledit tambour stationnaire (5) avec un jeu prédéterminé (h) dans une direction axiale et placé coaxialement audit tambour stationnaire (5), ledit tambour de tête comprenant :
- un certain nombre de gorges en spirale (40) formées dans une surface (41) dudit tambour rotatif (6) qui fait face audit tambour stationnaire (5), s'étendant depuis une position intérieure sur ladite surface (41) dudit tambour rotatif (6) à proximité de son axe jusqu'à la périphérie extérieure de celui-ci, pour produire un film d'air en rejetant de l'air hors de la zone intérieure dudit tambour jusqu'à une position extérieure de celui-ci par action de la rotation dudit tambour rotatif (6) ;
- ledit jeu prédéterminé (h) étant tel qu'un jeu à une position de départ (30a) ou un support en bande commence à s'enrouler autour d'une surface circonférentielle du tambour est plus important qu'à une position (30b) où se termine l'enroulement.

10. Tambour de tête selon l'une ou l'autre des revendications 8 et 9, dans lequel le changement en hauteur de la surface (27) de ladite partie annulaire dudit tambour stationnaire (5) a lieu par étages.

11. Tambour de tête selon l'une ou l'autre des revendications 8 et 9, dans lequel le changement en hauteur de la surface (27) de ladite partie annulaire dudit tambour stationnaire est continu.

12. Tambour de tête selon l'une quelconque des revendications 8 à 11, dans lequel ledit support en bande est une bande magnétique, et une tête magnétique (7) est montée sur ledit tambour rotatif (6).

13. Tambour de tête selon l'une quelconque des revendications 8 à 12, dans lequel ledit système à tambour est monté dans un magnétoscope.

14. Tambour de tête selon l'une quelconque des revendications 8 à 13, dans lequel ledit système à tambour est monté dans un magnétophone à bande.
